# EUROPEAN PATENT SPECIFICATION

(11) **EP 1 494 547 B1**
(45) Date of publication and mention of the grant of the patent: **29.10.2008**
(21) Application number: 03726120.3
(22) Date of filing: 26.03.2003
(51) Int. Cl.: A23L 1/217, A23L 1/218

(54) **APPLICATION OF BRINE SOLUTIONS TO FOOD PRODUCTS, WITHOUT THE PRODUCTION OF EFFLUENT**
AUSBRINGUNG VON KOCHSALZLÖSUNGEN AUF NAHRUNGSMITTELPRODUKTE OHNE ANFALL VON ABWASSER
APPLICATION DE SOLUTIONS DE SAUMURE SUR DES PRODUITS ALIMENTAIRES SANS PRODUCTION D'EFFLUENT

(30) Priority: 29.03.2002 US 109059
(43) Date of publication of application: 12.01.2005
(73) Proprietor: Frito-Lay North America, Inc., Plano, TX 75024 (US)
(72) Inventor: BARBER, Keith, A., Frisco, TX 75034 (US); SLOVAK, William, R., Collyville, TX 76034 (US)
(74) Representative: Daniels, Jeffrey Nicholas
(86) International application number: PCT/US2003/009291
(87) International publication number: WO 2003/084348

(56) References cited:
- FR-A- 2 400 840
- NL-C- 1 005 938
- US-A- 2 332 128
- US-A- 3 522 058
- W.F. TALBURT: "potato processing" 1975, , AVI , USA XP002244779 pp.365-369, 659-661 the whole document

## Description

### BACKGROUND OF THE INVENTION

### 1. Field of the Invention

This invention pertains to the application ofbrine solution to potato slices to alter the texture of potato chips formed when the slices are cooked or fried, and particularly to a method for applying brine to potato slices in a controlled manner so as to avoid effluent waste product by eliminating the need to discharge used brine solution.

### 2. Prior Art

US-A-2332128 discloses processes of and compositions for treating fresh fruit. More particularly, it relales to the surface treatment of fruit for the purpose of permanently depositing thereon surface modifying materials.

US-A-3522058 discloses poultry products which have been treated in the conventional manner and are subsequently immersed in a boiling brine solution.

FR-A-2400840 discloses machines which allow treatment of seeds and fruits to obtain their conservation.

NL-C-1005938 discloses treatment of organic products (*e.g.* olives) in salt solution.

Snack foods, such as snack food chips, are a prominent part of people's diets in many parts of the world. Snack food chips are made from vegetables, typically potato slices, and are prepared in commercial quantities in automated plants using a number of processing machines. In general, quantities of harvested vegetables are washed and sliced and then cooked, typically in a hot oil fryer. As part of the process of making these snack foods, and, in particular, in the pre-frying processing of potato slices for potato chips, it is beneficial to wash the slices in one or more water baths to remove excess surface starch from the slices to thereby limit the undesirable build-up of such starches in the fryer. After frying or cooking the chips, spices and/or other flavorings are typically applied to the surface of the chips, and the chips are packaged in bags, cans, etc.

As described, for example, by J. Blahovec, J. Vacek, and K. Patocka in Texture of Fried Potato Tissue as Affected by Pre-Blanching in Some Salt Solutions, Journal of Texture Studies 30 (1999) 493-507, the disclosure of which is hereby incorporated by reference, the application of a solution of water mixed with different chloride compounds (e.g., Na, Ca and Mg), to potato slices prior to frying affects the texture by increasing crispness of the finished chips. Washing potato slices in a bath of brine solution comprising water and sodium chloride (NaCl) prior to frying the slices increases the crispness of the chips This is useful because crispiness is felt to be synonymous with freshness for snack food chips and greatly enhances the pleasure of eating. It is undesirable, however, that the flavor of the finished chip be appreciably affected by the application of the brine solution, and, thus, careful control of the amount of chloride compound deposited on each slice should be maintained. Controlling the amount of chloride compound deposited on each slice is effected, at least in part, by controlling the concentration of the chloride compound in the brine solution in which the slices are bathed prior to frying.

A commercial process for producing potato chips with enhanced crispness by application of a brine solution has been used in the past. In this past-used process, potato slices are preliminarily washed in one or more water baths to remove excess surface starch and are then marinated in a brine solution bath in order to give the potato chips an enhanced crispy texture without altering the flavor of the chips. Air knives are typically used to remove excess surface water from the slices after the water bath. Fresh water is constantly added to the water bath(es) and a stand pipe is employed in each bath to ensure a constant volume of water in the bath. The combination of a stand pipe with constant addition of fresh water causes the water in the bath to be turned over periodically. For example, if fresh water is added to a 2271 litre (600 gallon) tank at the rate of 379 litres/min (100 gal./min), the tank water would turn over - i.e., the tank water would be replaced - approximately every 6 minutes.

Despite the prior washing of the potato slices in the water bath(s), some residual surface starch will inevitably be carried on the potato slices into the brine solution bath. Over a period of time, and with the large quantities of potato slices processed in a commercial potato chip manufacturing operation, an undesirable starch build up can occur in the brine solution bath. To avoid excessive starch build-up, it is necessary to remove used brine solution from the bath and replace it with fresh, unused brine solution. It is impractical, however, to periodically stop the processing of potato slices for a period long enough to permit the brine solution to be replaced. In an exemplary commercial potato chip manufacturing operation, 9072 kg (20,000 pounds) of potato slices are processed per hour through a brine bath of 946 litres (250 gallons). Appreciable starch build-up can occur in as little as 10 minutes. Thus, the process would have to be stopped shortly thereafter to replace the brine solution. Alternatively, the potato slices could be diverted to a second brine bath while the first brine bath is being replaced, but such a scheme would have a number of disadvantages. The equipment necessary for diverting potato slices between two or more brine baths would be costly to instal and maintain, and the additional space requirements for such diverting equipment, not to mention the additional brine bath tank(s), would substantially increase the overall space requirements of the processing plant.

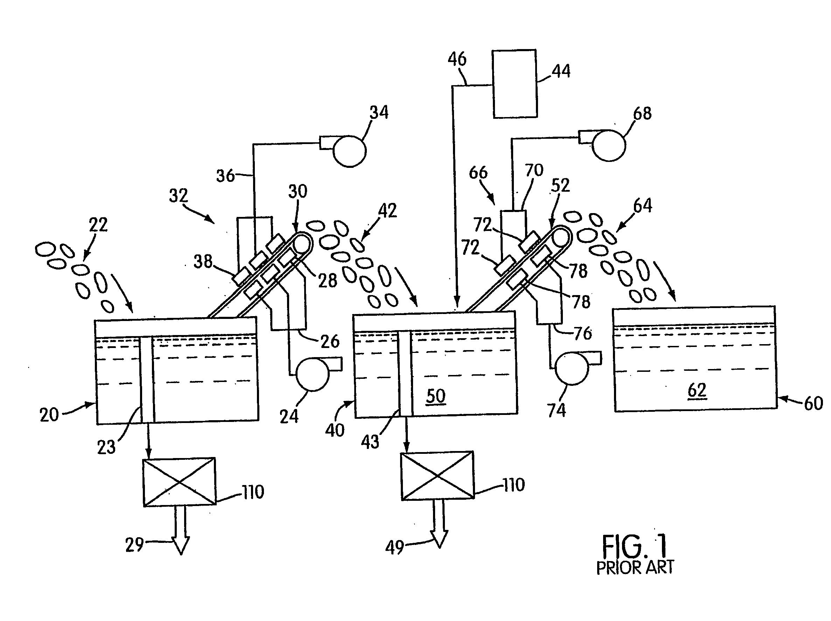

To overcome these problems a brine application system has been devised and is presently in use whereby the brine solution in the brine bath is periodically "turned over" during the continuous processing of potato slices. Such a system is schematically illustrated in Figure 1. In the system shown in Figure 1, potato slices, generally indicated at reference number 22, are supplied in a continuous stream to one or more water baths, generally indicated at 20 (only one water bath being shown in Figure 1 for simplicity) in order to remove excess surface starch from the slices. As described above, fresh water is constantly added to the tank 20, and a standpipe 23 is provided to permit excess water escape the tank 20 and to ensure a constant volume of water in the tank so that the tank turns over periodically. The discharge through the standpipe 23 preferably flows through a filter and starch recovery system 110 (described in more detail below), which removes excess suspended starch solids from the discharged water. Water exiting the filter and starch recovery system is typically discharged to drain as shown at 29.

The washed slices are removed from the bath 20 by a conveyor system generally indicated at reference number 30. An air knife system, generally indicated at reference number 32 and including a blower fan 34 connected by a conduit and manifold system 36 to nozzles 38 and a vacuum fan 24 connected by a conduit and manifold system 26 to nozzles 28, is disposed adjacent the conveyor system 30 to remove excess surface moisture (i.e., water) from the slices being removed from the bath 20. The washed slices from which excess surface moisture has been removed are supplied, as indicated at 42, to a brine bath tank 40 containing an amount of brine solution 50 having a specific concentration of a chloride compound, for example, NaCl. Excess moisture is removed from the potato slices supplied to the brine bath tank 40 because the cumulative affect of such moisture, if not removed from the slices introduced into the brine bath can affect the concentration of the chloride compound within the brine solution 50. After marinating in the brine solution 50 for a specified residence time, the potato slices are removed from the brine bath tank 40 by a conveyor system generally indicated at reference number 52. An air knife system, generally indicated at reference number 66 and including a blower fan 68 connected by a conduit and manifold system 70 to nozzles 72 and a vacuum fan 74 connected by a conduit and manifold system 76 to nozzles 78, is disposed adjacent the conveyor system 52 to remove excess surface moisture (i.e., brine solution) from the slices being removed from the brine bath tank 40. The brine-treated slices from which excess surface moisture has been removed are supplied, as indicated at 64, to a fryer, generally indicated at reference number 60, containing an amount of oil 62 that is heated to a predetermined temperature to effect frying of the slices. Excess moisture is removed from the potato slices supplied to the fryer 60 because such moisture, if introduced to the frying oil 62, can deleteriously affect the efficiency of the frying procedure, as is generally known in the art.

In the brine application system described above, brine solution is continuously removed from the brine bath tank 40 as solution absorbed in and carried on the surfaces of the potato slices 64 processed through the tank 40. In the prior brine turnover system, in addition to the brine solution that is removed from the brine solution bath tank 40 on potato slices processed through the tank, used brine solution is continuously removed from the tank 40 at predetermined rate as generally represented at reference number 49. In addition fresh brine solution is continuously added to the tank 40 by a brine supply system (also known as a brine generator) including a supply of the chloride compound, generally indicated at 44, to which water is added to form solution having a predetermined concentration of the chloride compound, and a solution transport system, generally indicated at 46, which may include conduits or flumes or a combination thereof. Fresh brine solution is added to the tank 40 by the brine supply system at a predetermined rate and chloride compound concentration, and a standpipe 43 is provided in the brine bath tank 40, so as to maintain the brine solution 50 at a desired volume and chloride compound concentration within the brine bath tank 40. The brine solution 50 in the tank 40 is turned over when an amount of used brine solution that is about equal to the volume of brine solution 50 within the brine bath tank 40 is removed from the tank 40 and is replaced by about an equal amount of fresh brine solution.

In a such a brine turnover system employed by the assignee of this invention, in which 9072 kg (20,000 pounds) of potato slices are process per hour in a brine bath tank of 946 litres (250 gallons), it was found that excessive starch build-up can be substantially avoided with a brine solution turnover rate of 6 minutes. As shown in Figure 1, discharge from the standpipe 43 passes through a filter and starch recovery system 110 to remove excess suspended starch solids from the used brine solution, and the relatively solids-free used solution is discharged, as shown at 49. In order to implement this process in a commercially practical manner, however, it is necessary to discharge the used brine solution that is continuously removed (i.e., at 49 in Figure 1) from the brine bath tank 40 as an effluent discharge.

The forgoing brine turnover system, while commercially practical and effective, is no longer an option in certain areas because of prohibitions relating to effluent discharge. For example, the discharge of certain effluents, including brine, is currently prohibited in the state of California, and it is believed that other states within the United States will also enact similar prohibitions. In such areas where effluent discharges are prohibited, an alternative to discharge and disposal is required. Discarded used brine solution could be kept in holding tanks and then transported to treatment facilities where the solution would be processed so as to make its disposal permissible under applicable regulations. Alternatively, treatment equipment could be incorporated into the potato chip manufacturing plant to permit the on-site treatment of used brine solution.

The costs associated with transport and treatment of discarded brine solution or the cost associated with treatment equipment as well as the space requirements for holding tanks and/or treatment equipment would render such options for disposing used brine solution commercially undesirable. Thus, it would be very difficult and costly to use brine solution for commercial purposes due to the increased difficulty encountered in disposing the effluent.

For the foregoing reasons, there is a need for a method to effectively apply brine solution to foods in a manner that assures their crispy texture, but does not create an effluent bi-product.

### SUMMARY

The present invention is directed to a process that enables the effective application of brine solution to food products by using a brine application system which applies brine solution in a controlled manner that allows the food to obtain a crispy texture and wherein substantially no effluent by-product is created. The present invention provides a method for applying a brining substance to food pieces comprising:
depositing the food pieces into a tank containing a brine solution having a predetermined concentration of the brining substance;
removing the food pieces from the tank, wherein the food pieces carry an amount of surface solution after being removed from the tank; and
replenishing the solution in the tank so as to maintain a substantially constant volume of solution in the tank and to substantially maintain the predetermined concentration of substance in the solution contained in the tank, characterized in that solution is removed from the tank solely as solution absorbed in and carried on food pieces removed from the tank, the amount of solution added to the tank during the replenishing step is substantially equal to the amount of solution removed from the tank via surface solution carried on or absorbed in food pieces removed from the tank so that the entire volume of solution within the tank is turned over after a predetermined amount of food pieces are processed through the tank and without the production of effluent from the tank.
Further the present invention provides a system for applying a substance to food pieces according to the above method, the system comprising:
a tank for containing a solution having a predetermined concentration of the substance;
a first conveyor system for removing food pieces from said tank;
a substance supply system constructed and arranged to maintain the solution in said tank substantially at the predetermined concentration of the substance;
a microbicide supply system constructed and arranged to add a microbicide to the solution contained in said tank to substantially arrest the growth of microbes in the solution; and
a filter system connected to said tank and constructed and arranged to substantially remove insoluble suspended solids from the solution contained in said tank and to return solution from which insoluble suspended solids have been removed back to said tank.

In accordance with one aspect of the present invention, a brining substance is applied to food pieces, such as potato slices, without the need for discharging used brine solution as effluent. The food pieces are washed, and the amount of surface water carried on the food pieces after the washing step is controlled. The washed food pieces are deposited into a tank containing a brine solution having a predetermined concentration of a brining substance. The food pieces removed from the brine tank carry an amount of surface solution after being removed from the tank, and the amount of surface solution carried on the food pieces after being removed from the tank is greater than the amount of surface water carried into the tank on the food pieces after the washing step. The brine solution in the tank is replenished so as to maintain a substantially constant volume of solution in the tank and to substantially maintain the predetermined concentration of the brining substance in the solution contained in the tank. The brine concentration in the brine tank can be maintained by adding brine in solution, by the addition of dry salts, or by a combination thereof. Discharge of used brine solution is unnecessary because the volume rate of solution added to the tank during the replenishing step plus the volume rate of water added to the tank via surface water carried on the food pieces after the washing step is approximately equal to the volume rate of solution removed from the tank via surface solution carried on food pieces removed from the tank so that the entire volume of solution within the tank is turned over after a predetermined amount of food pieces are processed through the tank. The water balance in the tank is also affected in a minor way by dehydration of the potato slices due to the brine solution.

In accordance with another aspect of the invention, a system for applying a substance to food pieces comprises a tank for containing a solution having a predetermined concentration of the substance, a first conveyor system for removing food pieces from the tank, a substance supply system constructed and arranged to deposit solution of the substance into the tank to replenish solution volume that is removed from the tank on the surfaces of the food pieces that are removed by the first conveyor system and to maintain a substantially constant volume of the solution in the tank and to maintain the solution in the tank substantially at the predetermined concentration of the substance, preferably, but optionally, a microbicide supply system constructed and arranged to add a microbicide to the solution contained in the tank to substantially arrest the growth of microbes in the solution; and a filter system connected to the tank and constructed and arranged to substantially remove insoluble suspended solids from the solution contained in the tank and to return solution from which insoluble suspended solids have been removed back to the tank.

With these and other objects, advantages and features of the invention that may become hereinafter apparent, the nature of the invention may be more clearly understood by reference to the following detailed description of the invention, the appended claims and to the drawings attached hereto.

### BRIEF DESCRIPTION OF THE DRAWINGS

The invention will be described in detail with reference to the following drawings, in which like features are represented by common reference numbers and in which:

Figure 1 is a schematic diagram illustrating a prior art brine application system.

Figure 2 is a schematic diagram illustrating a brine application system and method according to the present invention.

Figure 3 is a schematic diagram illustrating a filter and starch recovery system employed in conjunction with the present invention.

### DETAILED DESCRIPTION

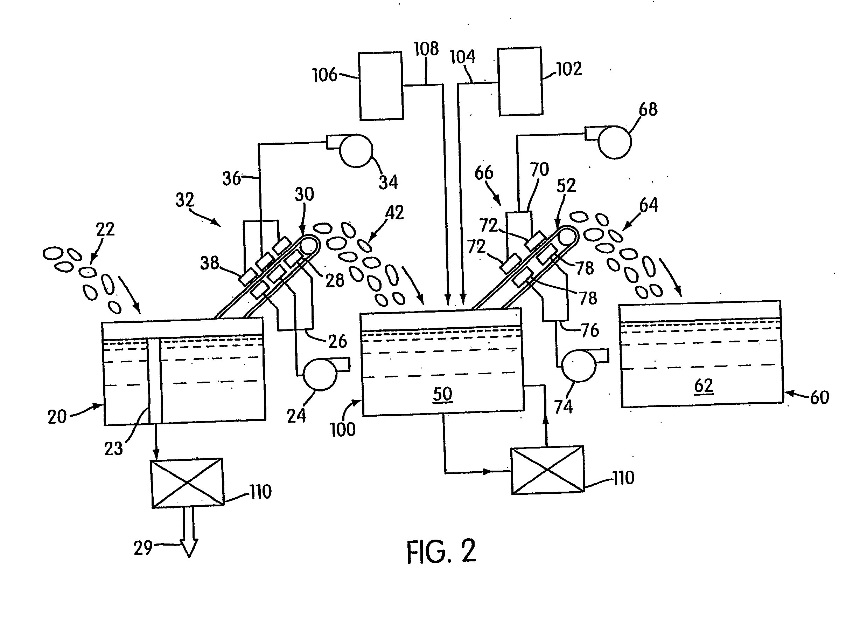

The present invention is described below in an exemplary way with reference to a brine application system and method in which discharge of used brine solution is unnecessary because brine is consumed and replaced with fresh brine at a rate that effects solution turnover without the need for used brine discharge. The system and method, which shares a number of general features in common with the prior art brine application system described above, is schematically illustrated in Figure 2. In the system shown in Figure 2, potato slices, generally indicated at reference number 22, are supplied in a continuous stream to one or more water baths, generally indicated at 20 (only one water bath being shown in Figure 2 for simplicity) in order to remove excess surface starch from the slices. Water is discharged from the bath 20 through the standpipe 23 and is passed through the filter and starch recovery system 110 to discharge at 29.

The washed slices are removed from the bath 20 by the conveyor system 30. The air knife system 32, including blower fan 34 connected by conduit and manifold system 36 to nozzles 38 and vacuum fan 24 connected by conduit and manifold system 26 to nozzles 28, is disposed adjacent the conveyor system 30 to remove excess surface moisture (i.e., water) from the slices being removed from the bath 20. The washed slices from which excess surface moisture has been removed are supplied, as indicated at 42, to a brine bath tank 100 containing an amount of brine solution 50 having a specific concentration of the chloride compound, for example, NaCl.

After being marinated in the brine solution 50, the potato slices are removed from the brine bath tank 100 by the conveyor system 52. It has been determined that brine effect can be accomplished by thoroughly wetting both surfaces of the slice, it is not necessary for the slices to soak in the solution for any appreciable time. The inventors have determined that when processing 9072 kg/hour (20,000 Ibs/hour) of slices in a 946 litre (250 gallon) brine bath tank 100, substantially all slices will be sufficiently wetted by the solution if the slices reside in the brine bath tank 100 from about two to about twelve seconds, and preferably from about six to about eight seconds..

The air knife system 66, including blower fan 68 connected by conduit and manifold system 70 to nozzles 72 and vacuum fan 74 connected by conduit and manifold system 76 to nozzles 78, is disposed adjacent the conveyor system 52 to remove excess surface moisture (i.e., brine solution) from the slices being removed from the brine bath tank 100. The brine-treated slices from which excess surface solution has been removed are supplied, as indicated at 64, to the fryer 60, containing an amount of oil 62 that is heated to a predetermined temperature to effect frying of the slices. Alternatively, the slices could be transported to one or more processing devices or alternative cooking apparatuses, such as a baking oven.

As with the prior art brine application system described above, the brine solution is continuously removed from the brine bath tank as solution absorbed in and carried on the surfaces of the potato slices processed through the tank 100. In addition, an amount of water is carried, in the form of surface moisture, on the washed slices 42 that are introduced to the brine bath tank 100. Unlike the prior art brine application system describe above and shown in Figure 1, however, used brine solution is not discharged from the brine bath tank 100. Instead, the amount of surface water carried on the slices 42 introduced to the brine bath tank 100 and the amount of surface solution carried on the slices 64 removed from the brine bath tank 100 is controlled so that the amount of surface solution carried on the slices 64 removed from the brine bath tank 100 is greater than the amount of surface water carried on the slices 42 introduced to the brine bath tank 100. As a consequence, the volume of liquid leaving the tank as brine solution on marinated slices is greater than the volume of liquid entering the tank as water on washed, pre-marinated slices, thus causing a net volume loss of solution as well as a net loss of the chloride compound in brine bath tank 100 due to the flow of potato slices into and out of the tank 100.

To offset the volume of liquid that is continuously being removed from the brine bath tank 100, and to replenish the amount of chloride compound also being removed from the tank, fresh brine solution is continuously added to the tank 100 by a brine supply system (i.e., a brine generator) including a supply of the chloride compound, generally indicated at 102, to which water is added to form a solution having a predetermined concentration of the chloride compound, and a solution transport system, generally indicated at 104, which may include conduits or flumes or a combination thereof. Fresh brine and/or salts are added to the tank 100 by the brine supply system to maintain a predetermined chloride compound concentration - taking into account the net loss of liquid volume due to potato flow into and out of the tank 100 and the concentration-diluting affect of water introduced to the tank 100 on washed, pre-marinated slices - so as to maintain the brine solution 50 at a desired volume and chloride compound concentration within the brine bath tank 100. As with the prior art brine application system, the brine 50 in the tank 100 is turned over periodically when an amount of used brine that is equal to the volume of brine 50 within the brine bath tank 100 is removed from the tank 100 and is replaced by an equal amount of fresh brine solution. Unlike the prior art brine application system, however, used brine solution is not discharged from the tank 100, but is removed from the tank 100 solely on the surfaces of the marinated slices 64 removed from the tank 100. In other words, all the brine is consumed on marinated slices; no used brine is discharged from the tank 100.

Because used brine is removed from the brine bath tank 100 solely by being consumed on marinated slices, the rate of volume turnover is significantly slower than for the prior art brine application system in which used brine solution is discharged from the brine bath tank 40 (See Figure 1). For example, in tests of a brine turnover system according to the present invention, in which 9072 kg (20,000 pounds) of potato slices were processed per hour in a brine bath tank of 946 litres (250 gallons), the turnover rate period is about 35 minutes, as opposed to the 6 minute turnover period achieved with the prior art brine turnover system. Because of this additional time that brine solution spends in the brine bath tank, it is preferable to add an anti-microbial agent (microbicide) to the brine bath tank 100 to avoid the growth of bacteria and other microbes in the brine bath tank 100. For this purpose, a microbicide supply system including a supply of microbicide, generally indicated at 106, and a transport system, generally indicated at 108, which may include conduits or the like is provided to supply microbicide to the brine bath tank 100 at a predetermined rate. A microbicide of peroxyacetic acid commercially available from Ecolab® under the trade name "Tsunami" is preferred.

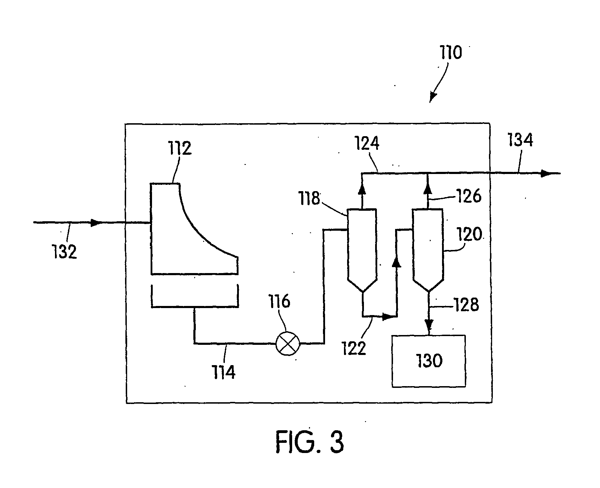

Also, because the used brine solution is not discharged, residual surface starch carried on the washed, pre-marinated slices can build up within the brine bath tank 100. To address this problem, a filter system, generally indicated at reference number 110, is provided for filtering starch out of the brine 50 contained within the brine bath tank 100. Further details of the filter and starch recovery system 110, which is a standard starch recovery system, are schematically shown in Figure 3.

Liquid (either water from the wash tank 20 or brine solution from the brine bath tank 40 or brine bath tank 100) enters the system 110 at 132 and initially passes through a hydrosieve, generally indicated at 112, which removes large solid particles from the liquid. The liquid is then transported through conduit 114 by force of pump 116 to a first cyclone separator 118 which removes suspended solids from the liquid. Relatively pure liquid from the first separator 118 is fed, via conduit 124, toward the discharge 134 of the system 110. The system may have two or more cyclone separators arranged in series to remove more and more liquid from the suspended solids. In the illustrated system 110 shown, a second cyclone separator 120 is provided, and a concentrated suspension of solids is passed via conduit 122 to separator 120, where more liquid is removed and directed, via conduit 126 toward the discharge 134. The solids removed from the liquid are passed via a line 128 to a starch recovery evaporator 130 in which most of the remaining liquid is evaporated from the starch solids, leaving a starch flake, with a minor brine component, that can be collected and removed from the system. The relatively pure liquid discharged from the system 110 at 134 can be discharged to drain, as in the case of the system 110 being used to recover starch solids from water discharged from the bath tank(s) 20 or from the brine solution discharged from the prior art brine bath tank 40, or the discharge at 134 can be sent back to the brine bath tank 100 as in the case of the system 110 being used to recover starch solids from water discharged from the brine bath tank 100.

To further illustrate the method of the present invention, the following example is provided.

Potato slices are processed at a rate of 9072 kg/hour (20,000 pounds per hour). Washed, pre-marinated potato slices enter the brine bath tank 100 with a surface moisture of 9-11%, by weight of the potato slice, in the form of water. The amount of surface moisture is controlled by the air knife system 32. The volume of brine solution 50 in the brine bath tank 100 is about 946 litres (250 gallons) and the chloride compound concentration of the brine solution 50 is about 4% NaCl, where the concentration is determined as grams per liter (i.e., kilogram) of water. The residence time that the slices spend marinating in the brine bath tank 100 in order to assure proper wetting of the slices by the NaCl solution is 6-8 seconds. Subsequently, the potato slices exit the brine bath tank 100 with a surface moisture of 20-25% by weight of potato slice in the form of surface brine solution NaCl is replaced in the brine bath tank 100 by adding 25-26% saturated NaCl solution to the tank 100 at a rate of about 3.8 litres/min (a gallon per minute). The slices then pass through the air knife system 66, which takes the surface moisture of the marinated slices down to 14-16% by weight of the potato slices. The turnover rate for the brine bath tank is about 35 minutes for the potato processing rate, tank size, and input and output surface moisture contents mentioned above. Peroxyacetic acid is added in a 15% solution to the brine bath tank 100 to maintain a preferred concentration of at least about 5 ppm and preferably at least about 15 ppm. The slices are then fried into chips preferably having a NaCl content of about 3% by weight of the chip due to the application of the brine solution. The amount of NaCl on the finished chips is controlled by controlling the concentration of NaCl in the brine bath tank 100 and by controlling the amount of surface solution removed from the marinated slices by the air knife system 66.

While the invention has been described in connection with what are presently considered to be the most practical and preferred embodiments, it is to be understood that the invention is not to be limited to the disclosed embodiments, but, on the contrary, is intended to cover various modifications scope of the appended claims.

## Claims

1. A method for applying a brining substance to food pieces (42) comprising:
depositing the food pieces (42) into a tank (100) containing a brine solution (50) having a predetermined concentration of the brining substance;
removing the food pieces from the tank (100), wherein the food pieces carry an amount of surface solution after being removed from the tank (100); and
replenishing the solution in the tank (100) so as to maintain a substantially constant volume of solution (50) in the tank (100) and to substantially maintain the predetermined concentration of substance in the solution (50) contained in the tank (100), **characterized in that** solution is removed from the tank solely as solution absorbed in and carried on food pieces removed from the tank (100), the amount of solution added to the tank (100) during the replenishing step is substantially equal to the amount of solution removed from the tank (100) via surface solution carried on or absorbed in food pieces removed from the tank (100) so that the entire volume of solution (50) within the tank (100) is turned over after a predetermined amount of food pieces are processed through the tank (100) and without the production of effluent from the tank.

2. The method for claim 1, further comprising washing the food pieces (22) in water prior to depositing the food pieces in the tank (100), wherein the food pieces (42) carry a controlled amount of surface water after the washing step and the amount of surface solution carried on or absorbed in the food pieces after being removed from the tank (100) is greater than the amount of surface water carried on the food pieces (42) after the washing step, and wherein the sum of the amount of solution added during said replenishing step and the amount of water added to the tank (100) via surface water carried on or absorbed in the food pieces (42) after said washing step is substantially equal to the amount of solution removed from the tank (100) via surface solution carried on food pieces removed from the tank (100) so that the entire volume of solution (50) within the tank (100) is turned over after a predetermined amount of food pieces are processed through the tank (100).

3. The method of claim 1, further comprising filtering the solution contained with the tank (100) so as to substantially remove insoluble suspended solids from the solution.

4. The method of claim 1, further comprising adding a microbicide to the solution (50) in the tank (100) to substantially prevent microbial growth within the solution (50) contained in the tank (100).

5. The method of claim 1, wherein the substance is one of different chloride compounds of Na, Ca or Mg.

6. The method of claim 4, wherein the substance is NaCl.

7. The method of claim 4, wherein the microbicide comprises peroxyacetic acid.

8. The method of claim 2, wherein the washed food pieces are subjected to an air knife system (32) to control the amount of surface water carried on the washed food pieces (42) into the tank (100) containing a solution (50) of the substance.

9. The method of claim 1, further comprising depositing the food pieces (64) in a fryer (60) after removing the pieces from the tank (100) containing a solution (50) of the substance.

10. The method of claim 2, wherein the amount of surface water carried on the food pieces (42) into the tank (100) containing the solution (50) of the substance is about 9-11% by weight of the food pieces (42), and the amount of surface solution carried on the food pieces as they are removed from the tank is about 20-25% by weight of the food pieces.

11. The method of claim 1, wherein the solution (50) is an approximately 4% solution of NaCl.

12. The method of claim 9, further comprising subjecting the food pieces to an air knife system (66) between said tank (100) containing the solution (50) of the substance and the fryer (62) to control the amount of surface solution carried on the food pieces (64) into the fryer (62).

13. A system for applying a substance to food pieces according to the method of claim 1, the system comprising:
a tank (100) for containing a solution (50) having a predetermined concentration of the substance;
a first conveyor system (52) for removing food pieces from said tank (100);
a substance supply system (102) constructed and arranged to maintain the solution (50) in said tank (100) substantially at the predetermined concentration of the substance;
a microbicide supply system (106) constructed and arranged to add a microbicide to the solution (50) contained in said tank (100) to substantially arrest the growth of microbes in the solution (50); and
a filter system (110) connected to said tank (100) and constructed and arranged to substantially remove insoluble suspended solids from the solution (50) contained in said tank (100) and to return solution from which insoluble suspended solids have been removed back to said tank (100).

14. The system of claim 13, further comprising:
a wash tank (20) preceding said tank (100) for containing the solution (50) of said substance and containing water for washing said food pieces (22); and
a second conveyor system (30) for removing the food pieces from said wash tank (20) and for transporting washed food pieces to the tank (100) containing the solution (50) of the substance.

15. The system of claim 14, further comprising an air knife system (32) constructed and arranged to remove a portion of the surface water carried on the washed food pieces that are removed from said wash tank (20) by said second conveyor system (30).

16. A method of applying a brining substance to food pieces (42) according to claim 1, wherein the food pieces (42) are uncooked potato slices and the tank (100) containing the brine solution (50) having a predetermined concentration of the substance further contains a microbicide to substantially prevent microbial growth within the solution (50), the method further comprising the steps of depositing the uncooked potato slices (64) in a fryer (60) after removing the slices from the tank (100), and frying the slices to which the substance has been added to form potato chips.

## Patentansprüche

1. Verfahren zur Ausbringung einer einsalzenden Substanz auf Lebensmittelstücke (42), aufweisend:
Einbringen der Lebensmittelstücke (42) in ein Gefäß (100) das eine Salzlaugelösung (50) enthält, die eine vorgegebene Konzentration der einsalzenden Substanz aufweist;
Entfernen der Lebensmittelstücke aus dem Gefäß (100), wobei die Lebensmittelstücke eine Menge an Oberflächenlösung mitführen nachdem sie aus dem Gefäß (100) entfernt wurden; und
Nachfüllen der Lösung in dem Gefäß (100), um auf diese Weise ein im Wesentlichen konstantes Volumen der Lösung (50) in dem Gefäß (100) aufrecht zu erhalten und um die vorgegebene Konzentration der Substanz in der Lösung (50), die in dem Gefäß (100) enthalten ist, im Wesentlichen aufrecht zu erhalten, **dadurch gekennzeichnet, dass** Lösung einzig als Lösung aus dem Gefäß entfernt wird, die absorbiert ist in und mitgeführt wird von Lebensmittelstücken, die aus dem Gefäß (100) entfernt wurden, die Menge der während des Schritts des Nachfüllens in das Gefäß (100) hinzugefügten Lösung im Wesentlichen gleich ist der Menge der Lösung die aus dem Gefäß (100) entfernt wurde durch Oberflächenlösung die mitgeführt wurde auf oder absorbiert wurde in Lebensmittelstücken, die aus dem Gefäß (100) entfernt wurden, so dass das gesamte Volumen der Lösung (50) in dem Gefäß (100) umgesetzt ist, nachdem eine vorgegebene Menge von Lebensmittelstücken durch das Gefäß (100) verarbeitet ist, und ohne die Erzeugung eines Abwassers aus dem Gefäß.

2. Verfahren nach Anspruch 1, weiterhin aufweisend das Waschen der Lebensmittelstücke (22) in Wasser vor dem Einbringen der Lebensmittelstücke in das Gefäß (100), wobei die Lebensmittelstücke (42) nach dem Schritt des Waschens eine geregelte Menge an Oberflächenwasser mitführen und die Menge der Oberflächenlösung, die mitgeführt wurde auf oder absorbiert wurde in den Lebensmittelstücken nachdem diese aus dem Gefäß (100) entfernt wurden größer ist als die Menge des Oberflächenwassers, das nach dem Schritt des Waschens auf den Lebensmittelstücken (42) mitgeführt wird, und wobei die Summe der Menge der Lösung, die während des Schritts des Nachfüllens hinzugefügt wurde und die Menge an Wasser, die dem Gefäß (100) hinzugefügt wurde durch Oberflächenwasser, das nach dem Schritt des Waschens mitgeführt wurde auf oder absorbiert wurde in den Lebensmittelstücken (42) im Wesentlichen gleich ist der Menge an Lösung, die aus dem Gefäß (100) entfernt wurde durch Oberflächenlösung, die auf den aus dem Gefäß (100) entfernten Lebensmittelstücken mitgeführt wird, so dass das gesamte Volumen der Lösung (50) innerhalb des Gefäßes (100) umgesetzt wird, nachdem eine vorgegebene Menge von Lebensmittelstücken durch das Gefäß (100) verarbeitet ist.

3. Verfahren nach Anspruch 1, weiterhin aufweisend das Filtern der in dem Gefäß (100) enthaltenen Lösung, um auf diese Weise unlösliche schwebende Feststoffe im Wesentlichen aus der Lösung zu entfernen.

4. Verfahren nach Anspruch 1, weiterhin aufweisend das Hinzufügen eines Mikrobizids zu der Lösung (50) in dem Gefäß (100), um mikrobielles Wachstum innerhalb der in dem Gefäß (100) enthaltenen Lösung (50) im Wesentlichen zu verhindern.

5. Verfahren nach Anspruch 1, wobei die Substanz eine aus verschiedenen Chloridverbindungen mit Na, Ca oder Mg ist.

6. Verfahren nach Anspruch 4, wobei die Substanz NaCl ist.

7. Verfahren nach Anspruch 4, wobei das Mikrobizid Peroxyessigsäure aufweist.

8. Verfahren nach Anspruch 2, wobei die gewaschenen Lebensmittelstücke einer Luftbürstenanordnung (32) ausgesetzt werden, um die Menge an Oberflächenwasser zu steuern, die auf den gewaschenen Lebensmittelstücken (42) in das Gefäß (100) eingebracht werden, das eine Lösung (50) der Substanz enthält.

9. Verfahren nach Anspruch 1, weiterhin aufweisend das Einbringen der Lebensmittelstücke (64) in eine Friteuse (60) nach dem Entfernen der Stücke aus dem Gefäß (100), das eine Lösung (50) der Substanz enthält.

10. Verfahren nach Anspruch 2, wobei die Menge an Oberflächenwasser, das auf den Lebensmittelstücken (42) in das Gefäß (100) eingebracht wird das die Lösung (50) der Substanz enthält etwa 9 bis 11 % an Gewicht der Lebensmittelstücke (42) ist, und die Menge der Oberflächenlösung, die auf den Lebensmittelstücken mitgeführt wird wenn sie aus dem Gefäß entfernt werden, etwa 20 bis 25 % an Gewicht der Lebensmittelstücke ist.

11. Verfahren nach Anspruch 1, wobei die Lösung (50) eine in etwa 4 %-ige Lösung von NaCl ist.

12. Verfahren nach Anspruch 9, weiterhin aufweisend das Aussetzen der Lebensmittelstücke einer Luftbürstenanordnung (66) zwischen dem Gefäß (100), das die Lösung (50) der Substanz enthält, und der Friteuse (62), um die Menge an Oberflächenlösung zu steuern, die auf den Lebensmittelstücken (64) in die Friteuse (62) eingetragen wird.

13. Anordnung zur Ausbringung einer Substanz auf Lebensmittelstücke gemäß dem Verfahren nach Anspruch 1, die Anordnung aufweisend:
ein Gefäß (100) zur Aufnahme einer Lösung (50), die eine vorgegebene Konzentration der Substanz aufweist;
eine erste Förderanlage (52) zum Entfernen von Lebensmittelstücken aus dem Gefäß (100);
eine Substanzeinspeisungsanordnung (102), aufgebaut und eingerichtet um die Lösung (50) in dem Gefäß (100) im Wesentlichen mit der vorgegebenen Konzentration der Substanz aufrecht zu erhalten;
eine Mikrobizideinspeisungsanordnung (106), aufgebaut und eingerichtet um ein Mikrobizid zu der in dem Gefäß (100) enthaltenen Lösung (50) hinzu zu fügen, um das Wachstum von Mikroben in der Lösung (50) im Wesentlichen zu hemmen; und
eine mit dem Gefäß (100) verbunden Filteranordnung (110), die aufgebaut und eingerichtet ist um unlösliche schwebende Feststoffe aus der in dem Gefäß (100) enthaltenen Lösung (50) im Wesentlichen zu entfernen und um Lösung in das Gefäß (100) zurück zu führen, aus der unlösliche schwebende Feststoffe entfernt wurden.

14. Anordnung nach Anspruch 13, weiterhin aufweisend:
ein dem Gefäß (100) zur Aufnahme der Lösung (50) der Substanz vorangestelltes Waschgefäß (20), das Wasser zum Waschen der Lebensmittelstücke (22) enthält; und
eine zweite Förderanlage (30) zum Entfernen der Lebensmittelstücke aus dem Waschgefäß (20) und zum Transportieren gewaschener Lebensmittelstücke in das Gefäß (100), das die Lösung (50) der Substanz enthält.

15. Anordnung nach Anspruch 14, weiterhin aufweisend eine Luftbürstenanordnung (32), aufgebaut und eingerichtet um einen Teil des Oberflächenwassers zu entfernen, das auf den gewaschenen Lebensmittelstücken mitgeführt wird, die durch die zweite Förderanlage (30) aus dem Waschgefäß (20) entfernt werden.

16. Verfahren zur Ausbringung einer einsalzenden Substanz auf Lebensmittelstücke (42) gemäß Anspruch 1, wobei die Lebensmittelstücke (42) ungekochte Kartoffelscheiben sind und das Gefäß (100), das die Salzlaugelösung (50) enthält, die eine vorgegebene Konzentration der Substanz aufweist, weiterhin ein Mikrobizid enthält, um mikrobielles Wachstum innerhalb der Lösung (50) im Wesentlichen zu verhindern, das Verfahren weiterhin aufweisend die Schritte des Einbringens der ungekochten Kartoffelscheiben (64) in eine Friteuse (60) nach dem Entfernen der Stücke aus dem Gefäß (100), und das Frittieren der Stücke, zu denen die Substanz hinzugefügt wurde, um Kartoffelchips auszuformen.

## Revendications

1. Procédé d'application d'une substance de saumurage à des morceaux d'aliment (42) comprenant :
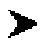 le dépôt des morceaux d'aliment (42) dans une cuve (100) contenant une solution de saumure (50) ayant une concentration prédéterminée de la substance de saumurage ;
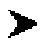 le retrait des morceaux d'aliment de la cuve (100), où les morceaux d'aliment portent une quantité de solution superficielle après avoir été retirés de la cuve (100) ; et
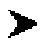 le reremplissage de la solution dans la cuve (100) de sorte à maintenir un volume essentiellement constant de la solution (50) dans la cuve (100) et à maintenir essentiellement la concentration prédéterminée de la substance dans la solution (50) contenue dans la cuve (100), **caractérisé en ce que** la solution est retirée de la cuve uniquement en tant que solution absorbée par et portée sur les morceaux d'aliment retirés de la cuve (100), la quantité de solution ajoutée à la cuve (100) pendant l'étape de reremplissage est essentiellement égale à la quantité de solution retirée de la cuve (100) en tant que solution superficielle portée sur ou absorbée par les morceaux d'aliment retirés de la cuve (100) de sorte que le volume total de la solution (50) dans la cuve (100) soit remplacé après le traitement d'une quantité prédéterminée de morceaux d'aliment dans la cuve (100) et sans production d'un effluent de la cuve.

2. Procédé selon la revendication 1, comprenant en outre le lavage des morceaux d'aliment (22) dans de l'eau avant le dépôt des morceaux d'aliment dans la cuve (100), dans lequel les morceaux d'aliment (42) portent une quantité contrôlée d'eau superficielle après l'étape de lavage et la quantité de la solution superficielle porté sur ou absorbé par les morceaux d'aliment après avoir été retirés de la cuve (100) est supérieure à la quantité d'eau superficielle portée sur les morceaux d'aliment (42) après l'étape de lavage, et où la somme de la quantité de solution ajoutée pendant ladite étape de reremplissage et de la quantité d'eau ajoutée à la cuve (100) via l'eau superficielle portée sur ou absorbée par les morceaux d'aliment (42) après ladite étape de lavage est essentiellement égale à la quantité de solution retirée de la cuve (100) via la solution superficielle portée sur les morceaux d'aliment retirés de la cuve (100) de sorte que le volume total de solution (50) dans la cuve (100) soit remplacé après le traitement d'une quantité prédéterminée de morceaux d'aliment dans la cuve (100).

3. Procédé selon la revendication 1, comprenant en outre la filtration de la solution contenue avec la cuve (100) de sorte à considérablement éliminer de la solution des solides suspendus insolubles.

4. Procédé selon la revendication 1, comprenant en outre l'ajout d'un microbiocide à la solution (50) dans la cuve (100) pour considérablement empêcher la croissance microbienne dans la solution (50) contenue dans la cuve (100).

5. Procédé selon la revendication 1, dans lequel la substance est choisie parmi différents chlorures de Na, Ca ou Mg.

6. Procédé selon la revendication 4, dans lequel la substance est NaCl.

7. Procédé selon la revendication 4, dans lequel le microbiocide comprend l'acide peroxyacétique.

8. Procédé selon la revendication 2, dans lequel les morceaux d'aliment lavés sont soumis à un système à lame d'air (32) pour contrôler la quantité d'eau superficielle portée sur les morceaux d'aliment lavés (42) dans la cuve (100) contenant une solution (50) de la substance.

9. Procédé selon la revendication 1, comprenant en outre le dépôt des morceaux d'aliment (64) dans une friteuse (60) après le retrait des morceaux de la cuve (100) contenant une solution (50) de la substance.

10. Procédé selon la revendication 2, dans lequel la quantité d'eau superficielle portée sur les morceaux d'aliment (42) dans la cuve (100) contenant la solution (50) de la substance est d'environ 9 à 11 % en poids des morceaux d'aliment (42), et la quantité de solution superficielle sur les morceaux d'aliment lorsqu'ils sont retirés de la cuve est d'environ 20 à 25 % en poids des morceaux d'aliment.

11. Procédé selon la revendication 1, dans lequel la solution (50) est une solution d'environ 4 % de NaCl.

12. Procédé selon la revendication 9, comprenant en outre la soumission des morceaux d'aliment à un système à lame d'air (66) entre ladite cuve (100) contenant la solution (50) de la substance et la friteuse (62) pour contrôler la quantité de la solution superficielle portée sur les morceaux d'aliment (64) dans la friteuse (62).

13. Système d'application d'une substance à des morceaux d'aliment selon le procédé de la revendication 1, le système comprenant .
> une cuve (100) contenant une solution (50) ayant une concentration prédéterminée de la substance ;
➢ un premier système de transport (52) pour retirer les morceaux d'aliment de ladite cuve (100) ;
➢ un système d'alimentation de la substance (102) construit et disposé pour maintenir la solution (50) dans ladite cuve (100) essentiellement à la concentration prédéterminée de la substance ;
➢ un système d'alimentation d'un microbiocide (106) construit et disposé pour ajouter un microbiocide à la solution (50) contenue dans ladite cuve (100) pour considérablement stopper la croissance des microbes dans la solution (50) ; et
➢ un système de filtration (110) relié à ladite cuve (100) et construit et disposé pour considérablement éliminer de la solution (50) contenue dans ladite cuve (100) les solides suspendus insolubles et pour renvoyer la solution de laquelle les solides suspendus insolubles ont été éliminés dans ladite cuve (100).

14. Système selon la revendication 13, comprenant en outre :
➢ une cuve de lavage (20) avant ladite cuve (100) contenant la solution (50) de ladite substance et contenant de l'eau pour le lavage desdits morceaux d'aliment (22) ; et
➢ un deuxième système de transport (30) pour retirer les morceaux d'aliment de ladite cuve de lavage (20) et transporter les morceaux d'aliment lavés vers la cuve (100) contenant la solution (50) de la substance.

15. Système selon la revendication 14, comprenant en outre un système à lame d'air (32) construit et disposé pour éliminer une portion d'eau superficielle portée sur les morceaux d'aliment lavés qui sont retirés de ladite cuve de lavage (20) par ledit système de transport (30).

16. Procédé d'application d'une substance de saumurage à des morceaux d'aliment (42) selon la revendication 1, dans lequel les morceaux d'aliment (42) sont des tranches de pomme de terre non cuites et la cuve (100) contenant la solution de saumure (50) ayant une concentration prédéterminée de la substance comprend en outre un microbiocide pour considérablement empêcher la croissance microbienne dans la solution (50), le procédé comprenant en outre les étapes consistant à déposer les tranches de pomme de terre non cuites (64) dans une friteuse (60) après le retrait des tranches de la cuve (100), et à faire frire les tranches auxquelles la substance a été ajoutée pour former des chips de pomme de terre.
